# EUROPEAN PATENT APPLICATION

(11) **EP 4 468 540 A1**
(43) Date of publication of application: **27.11.2024**
(21) Application number: 23174682.7
(22) Date of filing: 22.05.2023
(51) Int. Cl.: H02G 3/32, F16B 2/08, F16L 3/137, B25J 19/00

(54) **CABLE HOLDER FOR COLLABORATIVE ROBOT'S CABLE MANAGEMENT**

(71) Applicant: ABB Schweiz AG, 5400 Baden (CH)
(72) Inventor: Rybak, Andrzej, 30-349 Kraków (PL); Rzepecki, Michal, 30-650 Kraków (PL); Eck, Peter, 8514 Amlikon-Bissegg, (CH); Markovic, Slavko, 8302 Kloten (CH)
(74) Representative: Wroblewski, Marcin Jan

(57) **Abstract**

The invention relates to a cable holder (1) for collaborative robot's cable management. It comprises a connecting plate (3), which in a side view is bent and which curvature is adapted to correspond to the curvature of the robot's arm. The connecting plate (3) has two free ends and has a base (2) that is adapted to hold the cable. The connecting plate (3) has at least one integral cable tie (4) with at least a toothed section, and at least one integral cable tie head (5) which engages with cable tie (4).

## Description

The subject of the invention is a cable holder. Cable holders are used for cable management in numerous fields of industry. They are also used in robotics applications, especially for cable management on collaborative robots. In various applications cable holders are commonly used with straps or cable ties, which are also used for cable management. Cable ties are frequently used, for example, to tie together objects such as wires into a bundle and then to attach the bundle to a fixture point.

From the patent application WO9822740A1 a one-piece cable tie is known. It is designed for securing a cable to a mounting surface. It has an elongated strap with a locking head on the one end of the strap. The locking head is adapted to cooperate with the strap to form a loop around the cable. The cable tie further includes a fastener coupled to the locking head for securing the cable to the mounting surface. For this purpose the fastener is adapted to cooperate with a threaded stud which is protruding from the mounting surface. The fastener includes a boss having a central bore to enable the boss to be mounted over the threaded stud. The fastener also includes a first set of flexible fingers formed on the boss which is disposed to project into the bore. Each finger comprises an arm pivotally connected to the boss and an engagement head formed on the arm for engaging the threaded stud. The fastener further includes a cover connected to the boss. The cable tie also includes a first rib formed on the locking head to engage a cable that is small in size in order to prevent movement of the cable tie relative to the cable and a second rib formed on the fastener to engage a cable that is large in size in order to prevent movement of the cable tie relative to the cable.

From the DE4200771A1, a flexible reopenable cable holder with a toothed grip band and a separated length adjusting mechanism is known. The re-openable cable binder is made of elastic material. The grip band has a free end with a toothed part. The length-adjusting mechanism has a second-toothed part. This part engages with the first teeth to adjust the diameter of the cable holder. The cable holder has a locking element, with a concave hinge hook. In order to cooperate with this locking element, the length adjusting mechanism is equipped with a matching hinge pin to form a pivotal joint. This joint has a lever arm forming a manually openable handle. The grip band at a distance from the closed joint acts on the lever arm such that the handle, upon closing, must overcome a dead point in relation to the length of the grip band. Besides the cable holder is provided with a holding part, which has a bore, which can be attached on a support. The device is used for securing rubber hoses or heating or ventilating tubes to supports. It can be closed securely by hand and is easy to re-open and it protects against cable being pulled out.

Finally, patent application EP3949050A1 discloses a fastening part for fastening a cable carrier to a component, especially adapted for collaborative robots applications. It can be used to fasten a different designs of the energy source cables or guides on the robot arm. It comprises a foot web which can be arranged on a component extending in the peripheral direction thereof and which in its end regions has holding means for a first fastening element in strand or band form for fastening the fastening part to the component. Strand or band forms a loop around the component. The fastening part has also a fastening web which extends in the direction of the foot web and has a plurality of fastening means for fastening a second fastening element of different configuration for fastening an energy guide to the fastening part. The foot web and the fastening web are connected together in their central region by way of a connecting element. Side regions of the fastening web, that extend beyond the connecting element in the longitudinal direction of the foot web, are arranged at a spacing relative to the foot web, and wherein the side regions have at least some of the fastening means as first fastening means. The foot web, the fastening web and the connecting element are produced at least predominantly from plastic so that they are simple to manufacture. In particular they can be produced in the form of plastic injection moldings. The connecting element is adapted to hold the foot web, especially in the form of an annular elastic strand or band. For this purpose it has a holding means, which are in the form of hook-shaped projections which are angled outwardly and towards the connecting element. In a plane extending parallel to the flexurally elastic web the projections have a contact surface extending in an arc for the annular elastic strand which can be passed therearound, over which the angled ends of the hook-shaped projections extend. The hook-shaped projections are formed in one piece on the fastening part.

Known solutions for attaching cables on the components, especially on robot arms are difficult to install. Usually, a user has a set of components that are used for fixing a cable. The user is faced with a cable holders and separate cable ties or straps. Any of these items can be easily dropped during work at the assembly site. The purpose of the invention is to provide a cable holder that is easy to install by the user.

A cable holder for collaborative robot's cable management, comprising a connecting plate, which in a side view is bent and which curvature is adapted to correspond to the curvature of the robot's arm, wherein the connecting plate has two free ends and has a base that is adapted to hold the cable. The essence of the invention is that the connecting plate has at least one integral cable tie with at least a toothed section and has at least one integral cable tie head which engages with cable tie.

It is beneficial, if the first free end of the connecting plate has at least one integral cable tie, and the second free end of the connecting plate has at least one integral cable tie head which engages with cable tie.

It is advantageous, when number of cable ties corresponds to number of cable tie heads, and preferably there are two cable ties and two cable tie heads.

It is beneficial, if the connecting plate and the base form one single element.

It is also good, when the cable holder is made of plastic by means of 3D printing or injection molding.

It is advantageous, when the base is located in the central part of the connecting plate.

It is useful, if the base has a coupling adapted to fix a cable mounting bracket.

It is good, when a connection between the base and the connecting plate is movable.

It is especially practical, when the cable ties are made of thermoplastic materials, or thermoplastic elastomers or elastic resins.

It is also good, when the profile, the base, and the cable ties are made of the same material.

The main advantage of the cable holder lies in the fact that a cable holder integrates cable tie and cable tie head. Therefore, it establishes single piece construction which is easy to install. Due to all-in-one design, an operator does not have to waste time searching for cable tie and after that its separate mounting on the cable holder. Instead, the operator uses single piece for cable assembly process. Also gripping and holding of bigger, single piece is easier and risk that cable holder or cable tie can be easily dropped during operation at the installation location is significantly reduced.

Any cable tie head might be used. In order to facilitate the efficient holding and maintenance functionality the set of releasable tie heads can integrated with the cable holder. Such an approach allows to take off and place again the cable holder if necessary, without necessity to destroy the cable holder. Application of releasable cable holder is important during servicing of the cable holder or cables or its modification and application in other place.

After the cable holder is attached to the robot's arm it is easy to use the base to fix cable or cable in conduit. For this purpose quick coupler can be used and appropriate part allowing for fast assembly can be made on the base located on the connecting plate.

In addition, the fact that the cable holder is a single component, increases its fixing reliability, regardless of the size of the cables held by the holder and the robot arm.

Moreover, the fact that the base is located in the central part of the connecting plate ensures an even distribution of the forces acting on the profile when the cables are attached to the base. This makes the device stable and suitable for a wide variety of cabling.

Advantages are also associated with manufacturing process with plastic 3D printing. In one manufacturing process it is possible to produce final product which is ready to use and to fix cables. Such approach is especially important during for prototyping in order to make fast verification of the new parts, as well as for fabrication of short series in order to answer in short time to the special requirements. Besides, the 3D printing technology offers freedom in the cable holder design, therefore the limitations related to the injection molding are not hindering the possibility to add all the functionalities in a single part. Although the 3D printing is suitable for short production series, the injection molding is much more appropriate for large scale production. Any of these methods might be used for production of the cable holder.

The object of the invention is presented in embodiments and in the drawing in which, individual figures represent:
Fig. 1 - a perspective view of the cable holder
Fig. 2 - a perspective view of the robot arm with attached cable holder;
Fig. 3 - another perspective view of the robot arm with attached cable holder;
Fig. 4 - a perspective view of the cable holder in another embodiment.

A cable holder 1 is used to attach an electrical cable to an collaborative robot's arm 8. The cable holder 1 is used to attached the electrical cable regardless whether it is the electric cable itself or the electrical cable in corrugated conduit, tube, or in any other cable's guiding means.

The cable holder 1 has a connecting plate 3 which in a side view is bent and which curvature is adapted to correspond to the curvature of the robot's arm 8. In this embodiment the connecting plate is adapted to correspond robot's arm 8 of circular shape. Curvature of the cable holder 1 corresponds to any diameter, elliptical shape, or similar shapes of robot's arm 8. For example, in embodiments designed for cobots, the connecting plate 3 is bent and is corresponds arm's diameters from 56 mm to 370 mm.

The connecting plate 3 has in its central area a base 2 that is adapted to hold the electrical cable. A width of the base 2 corresponds to a width of the connecting plate 3. However in other embodiments the base 2 might have different shapes and sizes.

The base 2 in orderto hold the electrical cable contains coupling 6 that cooperates with a cable mounting bracket 7. This makes possible to use different types of cable, irrespective of their diameter or other parameters, and the cable holder 1 provides stable and secure support for them. The cable mounting bracket 7 provides also support for corrugated conduits, tubes, or in any other guiding means.

The cable mounting bracket 7 might hold the electrical conduit or the cable itself. In other embodiments a connection between the connecting plate 3 and the base 2 might be flexible or movable. For example, base 2 can be connected with the connecting plate 3 by a ball-and-socket joint. It allows for proper alignment of the mounting bracket 7.

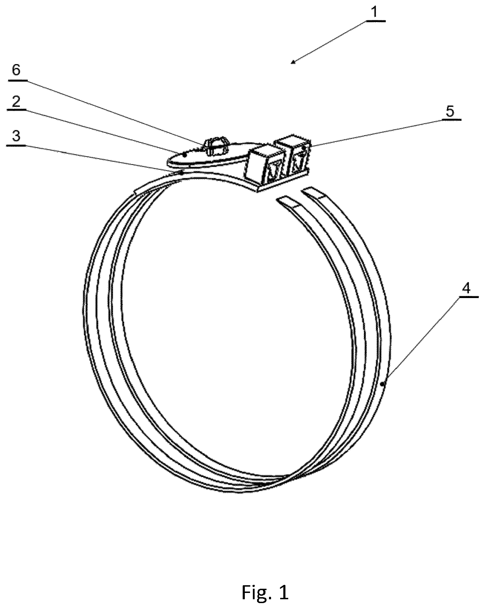

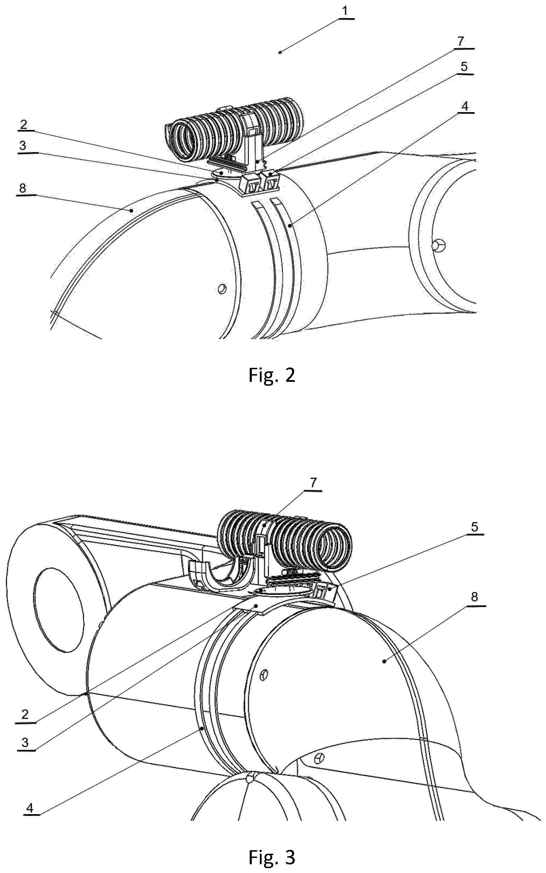

What is more, the connecting plate 3 has two free ends. In this embodiment the first free end of the connecting plate 3 (fig. 1 - fig. 3) has two integral cable ties 4 with a toothed section, and the second free end of the connecting plate 3 has two integral cable tie heads 5. Cable ties 4 from the first free end of the connecting plate 3 engage with cable tie heads 5 from the second free end of the connecting plate 3. Cable tie heads 5 are made as releasable clips, which allows for taking off and placing again the cable holder 1 if necessary without necessity to destroy any part of it. It is also possible to make cable tie heads 5 as working in a one-way so after locking cable tie 4 in cable tie head 5 it is impossible to pull out cable tie 4 from cable tie head 5.

In this embodiment number of cable ties 4 corresponds to a number of cable tie head 5.

In the embodiment, the cable holder 1 and all its elements are made of plastic by means of 3D printing. They are made of the same material, which facilitates the production process and significantly reduces the costs involved. In this embodiment the cable holder is made of polyamide. In other embodiments the same cable holder 1 might by produced by injection molding.

Irrespective of the production method following materials might be used for production of the cable holder:
- thermoplastic materials: polyamides, polypropylene, polyethylene, polystyrene;
- thermoplastic elastomers: styrenic block copolymers, thermoplastic polyolefin elastomers, thermoplastic elastomer vulcanizates, thermoplastic polyurethane elastomers, thermoplastic copolyester elastomers, thermoplastic polyamide elastomers.
- elastic resins: polyurethane, silicone.

Cable holder 1 with two cable ties 4 allows a stable assembly of any cable on the robot's arm. An operator's work during install of cable holder is also easy. All parts are integrated into single device. Moreover, base 2 with coupling 6, which are located in the central part of the connecting plate 3 ensure the stability of the entire structure.

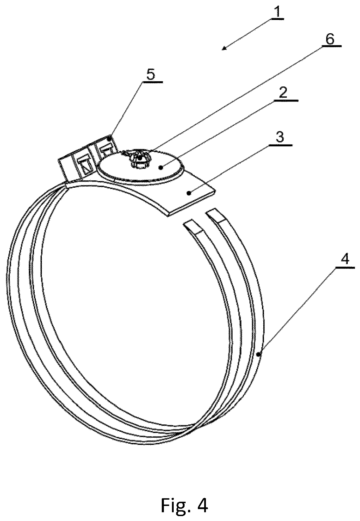

In the next embodiment the connecting plate 3, identically like in the previous embodiments has two free ends. The first free end of the connecting plate 3 (fig.4) has two integral cable ties 4 with a toothed section. However in order to further improve stability of the entire structure, cable tie heads 5 are located also in an area of the first free end of the connecting plate 3. Their entry hole is directed toward the second free end of the connecting plate 3. Cable ties 4 engage with cable tie heads 5. After assembly, cable ties 4 go around robot's arm and their ends, just before tie heads 5, press connecting plate 3 against robot's arm. It additionally improves fixing reliability.

In other embodiments number of cable ties 4 might be different than a number of cable tie heads 5. Hence after assembly on the robot's arm there might be free cable ties 4 or free cable tie heads 5.

Any number of cable ties 4 or cable tie heads 5 might be made on the connecting plate 3. The only limitation is a width of the connecting plate 3. However, in order to increase an amount of cable ties 4 or cable tie heads 5 the width of connecting plate 3 might be also increased.

In other embodiments, a cable holder is suitable for attaching electrical cable to any part or bracket that has a circular or elliptical shape. As a rule, the cable holder provides high level of support in applications on round or elliptical objects, in particular on robot's arms.

## Claims

1. A cable holder (1) for collaborative robot's cable management, comprising a connecting plate (3), which in a side view is bent and which curvature is adapted to correspond to the curvature of the robot's arm, wherein the connecting plate (3) has two free ends and has a base (2) that is adapted to hold the cable, **characterized in that** the connecting plate (3) has at least one integral cable tie (4) with at least a toothed section and has at least one integral cable tie head (5) which engages with cable tie (4).

2. A cable holder (1) according to claim 1, **characterized in that** the first free end of the connecting plate (3) has at least one integral cable tie (4), and the second free end of the connecting plate (3) has at least one integral cable tie head (5) which engages with cable tie (4).

3. A cable holder (1) according to claim 1 or 2, **characterized in that** number of cable ties (4) corresponds to number of cable tie heads (5), and preferably there are two cable ties (4) and two cable tie heads.

4. A cable holder (1) according to any claim from 1 to 3, **characterized in that** the connecting plate (3) and the base form one single element.

5. A cable holder (1) according to any claim from 1 to 4, **characterized in that** it is made of plastic by means of 3D printing or injection molding.

6. A cable holder (1) according to any of claim from 1 to 5, **characterized in that** the base (2) is located in the central part of the connecting plate (3).

7. A cable holder (1) according to any of claim from 1 to 6, **characterized in that** the base (2) has a coupling (6) adapted to fix a cable mounting bracket.

8. A cable holder (1) according to claim 6 or 7, **characterized in that** a connection between the base (2) and the connecting plate (3) is movable.

9. A cable holder (1) according to any of claim from 1 to 7, **characterized in that** the cable ties (4) are made of thermoplastic materials, or thermoplastic elastomers or elastic resins.

10. A cable holder (1) according to any of claim from 1 to 8, **characterized in that** the connecting plate (3), the base (2), and the cable ties (4) are made of the same material.
